# EUROPÄISCHE PATENTSCHRIFT

(11) **EP 3 300 038 B1**
(45) Veröffentlichungstag und Bekanntmachung des Hinweises auf die Patenterteilung: **18.11.2020**
(21) Anmeldenummer: 17193270.0
(22) Anmeldetag: 26.09.2017
(51) Int. Cl.: G07C 9/00, G06F 8/65, G06F 9/445

(54) **ZUTRITTSKONTROLLSYTEM**
ACCESS CONTROL SYSTEM
SYSTÈME DE CONTRÔLE D'ACCÈS

(30) Priorität: 26.09.2016 DE 102016118159
(43) Veröffentlichungstag der Anmeldung: 28.03.2018
(73) Patentinhaber: ABUS Seccor GmbH, 58300 Wetter (DE)
(72) Erfinder: Brecht, Christian, 82024 Taufkirchen (DE)
(74) Vertreter: Manitz Finsterwald Patent- und Rechtsanwaltspartnerschaft mbB

(56) Entgegenhaltungen:
- DE-A1-102006 062 306
- DE-A1-102011 054 637
- US-A1- 2015 248 297

## Beschreibung

Die vorliegende Erfindung betrifft ein elektronisches Zutrittskontrollsystem mit einem Funknetzwerk und mehreren elektrischen (einschließlich elektronischen) Zutrittskontroll-Komponenten. Das Funknetzwerk weist mehrere Zutrittskontroll-Funkknoten auf, von denen jeder eine Funkkommunikationseinrichtung und wenigstens eine elektrische Komponentenschnittstelle zum Anschließen einer der mehreren Zutrittskontroll-Komponenten umfasst. Ferner umfasst jeder Zutrittskontroll-Funkknoten eine Steuerungseinrichtung und eine Speichereinrichtung, in der eine Systemsteuerungs-Software gespeichert ist.

Ein derartiges Zutrittskontrollsystem ermöglicht die Steuerung, Überwachung und Verwaltung des Zutritts zu einem Gebäude oder einem Gebäudeteil für autorisierte Benutzer, wobei insbesondere das Öffnen (bzw. Schließen) von Türen oder Schranken in Abhängigkeit von benutzerspezifischen Zutrittsrechten ermöglicht oder veranlasst wird. Hierfür umfasst das Zutrittskontrollsystem eine entsprechende Anzahl von elektrisch ansteuerbaren Zutrittskontroll-Komponenten. Das Zutrittskontrollsystem kann auch zusätzliche Funktionen übernehmen, wie beispielsweise die Integration oder Kopplung mit einer Einbruchmeldeanlage oder die Ansteuerung von Komponenten der Gebäudetechnik (z.B. Beleuchtung), wobei derartige (an das Zutrittskontrollsystem angeschlossene) Komponenten im Zusammenhang mit der vorliegenden Erfindung ebenfalls als Zutrittskontroll-Komponenten bezeichnet werden. Um mit den verschiedenen Zutrittskontroll-Komponenten kommunizieren zu können, ist ein Funknetzwerk vorgesehen, das eine drahtlose Signalübertragung zwischen einer entsprechenden Anzahl von Zutrittskontroll-Funkknoten ermöglicht.

Die Systemsteuerungs-Software des jeweiligen Zutrittskontroll-Funkknotens ist eine zum systemgemäßen Betreiben des jeweiligen Zutrittskontroll-Funkknotens angepasste Software und stellt somit einen Bestandteil der Firmware des Zutrittskontrollsystems dar. Herkömmlicherweise definiert die Systemsteuerungs-Software den vorbestimmten Funktionsumfang, insbesondere die Steuerungsmöglichkeiten des Zutrittskontrollsystems. Um einen bestehenden, z.B. werksseitigen Funktionsumfang des Zutrittskontrollsystems nachträglich an neue Anwendungen bzw. Applikationen des Zutrittskontrollsystems oder neue Zutrittskontroll-Komponenten flexibel anpassen zu können, muss die Systemsteuerungs-Software jeweils aktualisiert werden. In der Praxis führt dies dazu, dass verschiedene Softwareversionen verwaltet bzw. gepflegt werden müssen, was mit einem unerwünschten Kostenaufwand verbunden ist. Der Aufwand ist insbesondere im Falle einer großen räumlichen Trennung von Zutrittskontroll-Funkknoten hoch. Beispielsweise kann es erforderlich sein, dass zum Auswählen einer Softwareversion oder zum Einstellen einer erwünschten Funktionalität sogenannte DIP (Dual Inline Package)-Schalter oder einzelne Widerstände der jeweiligen Steuerungseinrichtungen manuell geschaltet bzw. eingestellt werden. Zur Wahrung einer vollständigen Kompatibilität aller Zutrittskontroll-Funkknoten müssen zudem sämtliche Zutrittskontroll-Funkknoten aktualisiert werden. Dies ist auch dann notwendig, wenn die Systemsteuerungs-Software lediglich geringfügig geändert werden muss, beispielsweise aufgrund eines Fehlers im Programmcode (sogenannter "Bug"). Eine Aktualisierung der Systemsteuerungs-Software entspricht einer vollständigen Neuinstallation der Software. Hieraus ergibt sich wiederum ein Risiko im Hinblick auf Installationsfehler und neue Bugs, die erst im Nachhinein entdeckt werden und wiederum durch eine Aktualisierung behoben werden müssen. Ferner ist die Aktualisierung aufwändig, da die komplette Systemsteuerungs-Software an den zu aktualisierenden Zutrittskontroll-Funkknoten übertragen werden muss. Ein weiteres Problem besteht darin, dass während eines Aktualisierungsvorgangs an den betreffenden Zutrittskontroll-Funkknoten angeschlossene Zutrittskontroll-Komponenten temporär nicht benutzbar sind. Dies ist besonders bei Firmengebäuden und öffentlichen Gebäuden unerwünscht. Ferner müssen Zutrittskontroll-Funkknoten nach einer Aktualisierung bezüglich etwaiger Fehlfunktionen kontrolliert werden, wodurch zusätzlicher Aufwand verursacht wird. Gegebenenfalls müs sen auch vormals gespeicherte Zutrittsrechte und Benutzereinstellungen neu eingestellt werden.

US 2015 248 297 A1 offenbart ein vernetztes System zum Verwalten einer physischen Einbruchserkennung bzw. eines Alarms mit eine oberen Schicht von Servervorrichtungen, umfassend: Prozessorvorrichtungen und mit den Prozessorvorrichtungen zusammenwirkenden Speichern, eine mittlere Schicht von Gatewayvorrichtungen, die mit den Servervorrichtungen der höheren Schicht kommunizieren, und eine untere Schicht von Geräten, die funktionale Knoten umfassen, einschließlich einer Anwendungsschicht, die Routinen zum Bereitstellen von Knoten funktionen ausführt, und einer Vorrichtung zum Verwalten der unteren Schicht von Geräten, wobei die Vorrichtung einen Programmmanager instanziiert, der eine Zustandsmaschine zum Steuern der Anwendungsschicht in jedem der wenigstens einigen der funktionalen Knoten ausführt. Ferner ist ein Computerprogramm offenbart, welches einen Prozessor veranlasst, einen dynamischen Satz von benutzerdefinierten und unabhängig voneinander ausführbaren Funktionen zu verwalten, die während eines regulären Betriebs einer Sensorvorrichtung heruntergeladen werden können.

DE 10 2006 062 306 A1 offenbart eine Zugangs-, Überwachungs- und Kommunikationseinrichtung für wenigstens einen geschützten örtlichen Bereich von Gebäuden, Räumen oder Grundstücken. Die Einrichtung umfasst wenigstens ein Hauptgerät, wobei das Hauptgerät als Komponenten einen Bildschirm, eine Kamera, einen Lautsprecher, ein Mikrofon, wenigstens eine Funktionstaste, ein Steuergerät, einen Speicher und ein Signal- und Datenübertragungsgerät mit einer Netzwerkschnittstelle zur Signalübertragung zu und von wenigstens einer Gegenstelle über ein IP-Netzwerk umfasst. Das Hauptgerät kann eine Schnittstelle aufweisen, die wenigstes ein applikationsspezifisches Modul mit einer Schnittstelle zum Hauptgerät und wenigstens einer weiteren Schnittstelle zu einer Peripherieanlage umfasst, die als Einbruchmeldeanlage ausgebildet sein kann.

Es ist eine Aufgabe der Erfindung, die beschriebenen Probleme zu beseitigen. Die Aufgabe wird gelöst durch ein Zutrittskontrollsystem mit den Merkmalen des Anspruchs 1.

In der Speichereinrichtung des Zutrittskontroll-Funkknotens ist zusätzlich zu einer Systemsteuerungs-Software ein Anwendungssteuerungs-Programmmodul gespeichert. Die Systemsteuerungs-Software enthält zumindest ein Kommunikationsprotokoll und einen Interpreter für das Anwendungssteuerungs-Programmmodul. Die Steuerungseinrichtung des jeweiligen Zutrittskontroll-Funkknotens ist dazu angepasst, gemäß dem in der Systemsteuerungs-Software enthaltenen Kommunikationsprotokoll über die Funkkommunikationseinrichtung mit anderen der mehreren Zutrittskontroll-Funkknoten zu kommunizieren und über die Funkkommunikationseinrichtung das Anwendungssteuerungs-Programmmodul als Ganzes zu empfangen und in der Speichereinrichtung zu speichern. Ferner ist die jeweilige Steuerungseinrichtung dazu angepasst, mittels des in der Systemsteuerungs-Software enthaltenen Interpreters das gespeicherte Anwendungssteuerungs-Programmmodul auszuführen und in Abhängigkeit von Eingangssignalen, die über die Funkkommunikationseinrichtung oder die Komponentenschnittstelle empfangen werden, gemäß dem ausgeführten Anwendungssteuerungs-Programmmodul Ausgangssignale zu erzeugen, die über die Funkkommunikationseinrichtung oder die Komponentenschnittstelle ausgegeben werden.

Die in der Speichereinrichtung des jeweiligen Zutrittskontroll-Funkknotens gespeicherte Software ist somit modular aufgebaut und zumindest in eine Systemsteuerungs-Software und ein Anwendungssteuerungs-Programmmodul untergliedert. Die Systemsteuerungs-Software enthält zumindest einen wesentlichen Teil der Grundfunktionalität des Zutrittskontroll-Funkknotens und kann insofern auch als "Betriebssystem" des Zutrittskontroll-Funkknotens bezeichnet werden. Insbesondere umfasst die Systemsteuerungs-Software das erforderliche Kommunikationsprotokoll, um mit anderen Zutrittskontroll-Funkknoten kommunizieren zu können. Das hiervon getrennte Anwendungssteuerungs-Programmmodul hingegen enthält zumindest einen wesentlichen Teil der anwendungsspezifischen Funktionalität des Zutrittskontroll-Funkknotens, insbesondere um in Abhängigkeit von Eingangssignalen gemäß vorbestimmten Regeln Ausgangssignale zu erzeugen. Das Anwendungssteuerungs-Programmmodul wird mittels eines Interpreters ausgeführt, der in der Systemsteuerungs-Software enthalten ist. Insofern existiert eine deutliche Trennung zwischen der Systemsteuerungs-Software (enthält den Interpreter) und dem Anwendungssteuerungs-Programmmodul (wird von dem Interpreter ausgeführt). Zumindest ein Teil des Anwendungssteuerungs-Programmmoduls kann relativ leicht per Funkübertragung in die Speichereinrichtung eingespielt oder in der Speichereinrichtung modifiziert werden.

Ein Vorteil der Erfindung liegt darin, dass das Anwendungssteuerungs-Programmmodul als Ganzes flexibel aktualisiert werden kann, ohne dabei die Systemsteuerungs-Software (mit der darin enthaltenen Grundfunktionalität) verändern zu müssen. Eine manuelle Modifikation des Zutrittskontroll-Funkknotens (z.B. Einstellung von Widerständen und DIP-Schaltern) ist deswegen nicht mehr notwendig. Ferner kann das Anwendungssteuerungs-Programmmodul ohne Beeinträchtigung der regulären Funktionen des Zutrittskontrollsystems aktualisiert werden, d.h. der Betrieb des Zutrittskontrollsystems und insbesondere die Kommunikation zwischen den Zutrittskontroll-Funkknoten müssen hierbei nicht unterbrochen werden. Einzelne Zutrittskontroll-Funkknoten können unabhängig voneinander, insbesondere bedarfsgerecht, konfiguriert werden, wobei der Verwaltungsaufwand für das Zutrittskontrollsystems insgesamt optimiert werden kann. Ferner kann das Risiko von durch eine Aktualisierung verursachten Fehlfunktionen reduziert werden.

Das Anwendungssteuerungs-Programmmodul kann insbesondere solche Vorschriften zur Verfügung stellen, die zur Umsetzung der anwendungsspezifischen Funktionen des Zutrittskontroll-Systems, d.h. zur Realisierung der Systemintelligenz, wesentlich sind. Die Systemsteuerungs-Software kann demgegenüber einen festen Programmrahmen zur Verfügung stellen, der Basisvorschriften, z.B. das Kommunikationsprotokoll und den Interpreter zum Ausführen des Anwendungssteuerungs-Programmoduls, enthält. Die Systemsteuerungs-Software ist also im Sinne der Erfindung nicht Gegenstand einer z.B. regelmäßigen Aktualisierung, wobei dies erforderlichenfalls dennoch ermöglicht werden kann. Die aufwändige und risikobehaftete Aktualisierung der Systemsteuerungs-Software kann somit auf ein unbedingt erforderliches Minimum beschränkt werden. Wenn möglich, wird die Systemsteuerungs-Software überhaupt nicht aktualisiert. Entsprechend sollen diejenigen Vorschriften, die an eine spezielle Anwendung angepasst oder regelmäßig aktualisiert bzw. ergänzt werden müssen (z.B. benutzerspezifische Zutrittsrechte), im Anwendungssteuerungs-Programmmodul abgelegt sein. Hingegen sollen systemkritische Vorschriften, die voraussichtlich nie verändert werden müssen oder sollen, Bestandteil der Systemsteuerungs-Software sein.

Die Komponentenschnittstelle des jeweiligen Zutrittskontroll-Funkknotens kann zur Übertragung von analogen und/oder digitalen Signalen ausgebildet sein. Dies umfasst auch Schaltausgänge und/oder Schalteingänge zum Übertragen von Schalt- und/oder Zustandssignalen, z.B. einer angeschlossenen Zentrale einer Einbruchmeldeanlage.

Insbesondere kann die Komponentenschnittstelle wenigstens eines der mehreren Zutrittskontroll-Funkknoten eine Funkschnittstelle umfassen, um die Zutrittskontrollkomponente drahtlos an den Zutrittskontroll-Funkknoten anzuschließen. Somit wird eine drahtlose Kommunikation zwischen der Zutrittskontrollkomponente und dem Zutrittskontroll-Funkknoten ermöglicht. Die Zutrittskontrollkomponente kann hierfür ein eigenständiger Teilnehmer des Funknetzwerks des Zutrittskontrollsystems sein, der über das Funknetzwerk mit anderen Teilnehmern des Funknetzwerks, insbesondere mit anderen Zutrittskontroll-Funkknoten kommunizieren kann.

Zusätzlich oder alternativ zu der Funkschnittstelle kann die Komponentenschnittstelle eine (analoge oder digitale) Schnittstelle umfassen, um die Zutrittskontroll-komponente drahtgebunden an den Zutrittskontroll-Funkknoten anzuschließen.

Die Komponentenschnittstelle kann auch eine interne Schnittstelle in einer gemeinsamen Baueinheit des Zutrittskontroll-Funkknotens und der Zutrittskontroll-komponente sein (z.B. innerhalb eines gemeinsamen Gehäuses). Allgemein kann die Komponentenschnittstelle also als "logische" bzw. "virtuelle" Schnittstelle zum Ausgeben der Ausgangssignale bezeichnet werden.

Das erfindungsgemäße Zutrittskontrollsystem kann je nach Anwendung zusätzlich zu den erläuterten mehreren Zutrittskontroll-Funkknoten (mit gespeicherter Systemsteuerungs-Software und Anwendungssteuerungs-Programmmodul) auch noch weitere Zutrittskontroll-Funkknoten mit einem anderen Aufbau und/oder einer anderen Funktionsweise aufweisen. Insbesondere können Zutrittskontroll-Funkknoten ohne Komponentenschnittstelle vorgesehen sein, die z.B. lediglich als "Repeater-Funkknoten" des Funknetzwerks fungieren, d.h. die Reichweite des Funknetzwerks erhöhen, ohne direkt mit einer angeschlossenen Zutrittskontroll-komponente zu kommunizieren.

Vorteilhafte Ausführungsformen der Erfindung sind nachstehend und in den abhängigen Patentansprüchen genannt.

Vorzugsweise ist die Systemsteuerungs-Software für sämtliche der mehreren Zutrittskontroll-Funkknoten einheitlich. Dies ist vorteilhaft, um eine Basiskompatibilität aller Zutrittskontroll-Funkknoten und einen damit einhergehenden Grundfunktionsumfang des Zutrittskontrollsystems (unabhängig von dem jeweiligen Anwendungssteuerungs-Programmmodul) zu gewährleisten und eine einfache Systempflege zu ermöglichen. Ferner kann durch eine einheitliche Software die Zuverlässigkeit des Zutrittskontrollsystems gesteigert werden.

Gemäß einer Ausführungsform ist das Anwendungssteuerungs-Programmmodul für wenigstens einige der mehreren Zutrittskontroll-Funkknoten unterschiedlich. Hierdurch wird eine individuelle Programmierung eines jeweiligen Zutrittskontroll-Funkknotens ermöglicht. Der durch das Anwendungssteuerungs-Programmmodul bestimmte Funktionsumfang kann beispielsweise bedarfsgerecht (z.B. in Abhängigkeit einer angeschlossenen Zutrittskontroll-Komponente) ausgestaltet werden, wodurch insbesondere die Systemeffizienz erhöht werden kann. Sofern eine Verwaltung unterschiedlicher Programmmodule unerwünscht ist, aber dennoch ein individueller Satz von Vorschriften für jeden Funkknoten realisiert werden soll, kann alternativ hierzu für das Anwendungssteuerungs-Programmmodul ein im Wesentlichen einheitliches Gesamtmodul vorgesehen werden, welches sämtliche individuelle Vorschriften (für sämtliche Zutrittskontroll-Funkknoten des Zutrittskontrollsystems) enthält. In diesem Fall können die Steuerungseinrichtungen von verschiedenen der mehreren Zutrittskontroll-Funkknoten dazu angepasst sein, voneinander verschiedene Teile des (Gesamt-) Anwendungssteuerungs-Programmmoduls auszuführen (z.B. in Abhängigkeit von der eigenen Adresse).

Das Anwendungssteuerungs-Programmmodul kann auch Konfigurationsdaten, insbesondere benutzerspezifische Zutrittsrechte, umfassen. Beispielsweise kann eine von einem elektronischen Wandleser empfangene Öffnungsanweisung bezüglich eines darin enthaltenen elektronischen Schlüssels mit in dem Anwendungssteuerungs-Programmmodul hinterlegten Zutrittsrechten abgeglichen werden. Sofern der elektronische Schlüssel positiv verifiziert wird, kann die Öffnungsanweisung von dem betreffenden Zutrittskontroll-Funkknoten z.B. durch Öffnen eines angeschlossenen elektrisch ansteuerbaren Riegelaktuators umgesetzt werden.

Gemäß einer Ausführungsform umfasst die Speichereinrichtung des jeweiligen Zutrittskontroll-Funkknotens zumindest zwei Speichermodule, wobei die Systemsteuerungs-Software in einem der Speichermodule und das Anwendungssteuerungs-Programmmodul in einem anderen der Speichermodule gespeichert sind. Die Speichermodule können unabhängig voneinander und insbesondere unterschiedlich ausgebildet sein. Vorzugsweise ist die Systemsteuerungs-Software in einem Flash-Speicher gespeichert. Das Anwendungssteuerungs-Programmmodul kann entweder in demselben Flash-Speicher oder in einem separaten EPROM-Modul gespeichert sein (EPROM: Erasable Programmable Read-Only Memory). Separate Speichermodule können die Systemeffizienz und Zuverlässigkeit des Zutrittskontrollsystems verbessern.

Nach einer weiteren Ausführungsform umfasst das Funknetzwerk des Zutrittskontrollsystems einen Systemverwaltungs-Funkknoten, welcher zumindest eine Funckommunikationseinrichtung und eine Steuerungseinrichtung aufweist. Diese Steuerungseinrichtung ist dazu angepasst, zumindest einen Teil des Anwendungssteuerungs-Programmmoduls über die Funkkommunikationseinrichtung des Systemverwaltungs-Funkknotens an den jeweiligen Zutrittskontroll-Funkknoten zu senden. Das Senden des Programmmoduls bzw. des Teils hiervon kann gemäß demselben Kommunikationsprotokoll durchgeführt werden, welches für die drahtlose Kommunikation zwischen den Zutrittskontroll-Funkknoten vorgesehen ist. Der Systemverwaltungs-Funkknoten kann insbesondere als für einen Administrator gut zugängliche Schnittstelle des Zutrittskontrollsystems fungieren, über die alle Anwendungssteuerungs-Programmmodule zentral verwaltet werden können. Der Aufwand zum Aktualisieren der Anwendungssteuerungs-Programmmodule kann somit erheblich gesenkt werden. Der Systemverwaltungs-Funkknoten kann eine analoge oder digitale Schnittstelle zum Anschließen eines Systemverwaltungscomputers (z.B. PC, Server oder bekannte Nutzerendgeräte, insbesondere Notebook) und/oder eine analoge oder digitale Schnittstelle zum Anschließen einer portablen Speichereinrichtung (z.B. USB-Stick) aufweisen, über die neue Anwendungssteuerungs-Programmmodule oder Teile hiervon in das Funknetz des Zutrittskontrollsystems eingespielt werden können. Der Anschluss des Systemverwaltungscomputers kann selbstverständlich auch durch eine Funkverbindung (z.B. gemäß IEEE 802.11 Standard bzw. "WLAN/WIFI") erfolgen, die unabhängig von dem Funknetzwerk des Zutrittskontrollsystem ausgebildet sein kann.

Nach einer weiteren Ausführungsform umfasst wenigstens eine der Zutrittskontroll-Komponenten eine Türöffnungskomponente, insbesondere eine elektrisch ansteuerbare (einschließlich elektronische) Türöffnungskomponente, einen elektrisch ansteuerbaren Aktor, eine elektrisch ansteuerbare Signalisierungseinrichtung oder eine Komponente einer Einbruchmeldeanlage. Eine elektrische Türöffnungskomponente kann beispielsweise durch einen elektronischen Schließzylinder, einen elektronischen Wandleser, eine Lichtschranke, einen Bewegungssensor, oder dergleichen gebildet sein. Im Hinblick auf die Vielfalt möglicher Zutrittskontroll-Komponenten können die Zutrittskontroll-Funkknoten in Abhängigkeit der angeschlossenen Zutrittskontroll-Komponente(n) bedarfsgerecht mit einem individuellen Anwendungssteuerungs-Programmmodul versehen werden. Dies kann vorteilhafterweise unabhängig von der Systemsteuerungs-Software geschehen.

Der Begriff "elektrisch ansteuerbar" schließt nicht aus, dass die Türöffnungskomponente bzw. die Zutrittskontrollkomponente über Funk angesteuert werden kann, d.h. es muss keine drahtgebundene elektrische Leistungsverbindung zwischen der Türöffnungskomponente bzw. dem Zutrittskontrollfunkknoten und dem Zutrittskontroll-Funkknoten bestehen.

Das Anwendungssteuerungs-Programmmodul des jeweiligen Zutrittskontroll-Funkknotens enthält eine Reihe von Vorschriften (als Programm- bzw. Quellcode), die zur Definition des Funktionsumfangs des Zutrittskontroll-Funkknotens bzw. des Zutrittskontrollsystems dienen. So kann das Programmmodul z.B. eine Vorschrift darüber enthalten, dass eine in einem empfangenen Eingangssignal enthaltene Zustandsinformation (insbesondere einer Zutrittskontroll-Komponente, z.B. "Tür ist geöffnet") an zumindest einen vorbestimmten anderen Zutrittskontroll-Funkknoten oder an eine angeschlossene Zutrittskontroll-Komponente übermittelt werden soll. Ferner kann eine "Weiterleitungs-Vorschrift" vorgesehen sein, gemäß der eine in einem empfangenen Eingangssignal enthaltene Steuerungsanweisung (z.B. "Tür öffnen") an zumindest einen vorbestimmten anderen Zutrittskontroll-Funkknoten oder an eine angeschlossene Zutrittskontroll-Komponente übermittelt werden soll. Das Anwendungssteuerungs-Programmmodul enthält auch Vorschriften zur Signalverarbeitung. Beispielsweise kann eine Vorschrift lauten, dass die in mehreren empfangenen Eingangssignalen enthaltenen Zustandsinformationen oder Steuerungsanweisungen in einer vorbestimmten Weise logisch miteinander verknüpft werden sollen. Hierdurch können Zustandsinformationen und Steuerungsanweisungen innerhalb des Funknetzwerks verbreitet werden.

Um z.B. eine Signalweiterleitung tatsächlich umzusetzen, ist die Steuerungseinrichtung des jeweiligen Zutrittskontroll-Funkknotens dazu angepasst, auf der Grundlage eines empfangenen Eingangssignals, welches eine Steuerungsanweisung für zumindest einen anderen Zutrittskontroll-Funkknoten enthält, gemäß dem ausgeführten Anwendungssteuerungs-Programmmodul ein Ausgangssignal zu erzeugen, welches die Steuerungsanweisung enthält, und das erzeugte Ausgangssignal über die Funkkommunikationseinrichtung an den zumindest einen anderen Zutrittskontroll-Funkknoten direkt oder indirekt zu übermitteln. Ein Zutrittskontroll-Funkknoten kann somit als sogenannter "Repeater" im Funknetzwerk dienen, wodurch ein Funksignal von einem ersten Funkknoten an einen außerhalb seiner Funkreichweite liegenden zweiten Funkknoten übertragen werden kann, sofern sich dazwischen ein dritter Funkknoten zur Signalweiterleitung befindet. Eine Signalweiterleitung kann insbesondere auch von einer Zutrittskontroll-Komponente initiiert werden. Beispielsweise kann eine Anweisung zum Scharfschalten einer in das Zutrittskontrollsystem integrierten Zentrale einer Einbruchmeldeanlage von einer an einen Zutrittskontroll-Funkknoten angeschlossenen Türöffnungskomponente (z.B. elektronischer Wandleser oder elektronischer Schließzylinder) aus abgegeben werden. Die Anweisung kann dann von dem Funkknoten, der mit dieser Türöffnungskomponente verbunden ist, empfangen und an denjenigen Funkknoten übermittelt werden, der mit der Zentrale der Einbruchmeldeanlage verbunden ist, damit jener Funkknoten das Scharfschalten der Einbruchmeldeanlage veranlassen kann.

Die jeweilige Steuerungseinrichtung ist dazu angepasst, auf der Grundlage eines empfangenen Eingangssignals, welches eine Steuerungsanweisung für eine angeschlossene Zutrittskontroll-Komponente enthält, gemäß dem ausgeführten Anwendungssteuerungs-Programmmodul ein Ausgangssignal zu erzeugen, welches einen Steuerungsbefehl zur Umsetzung der Steuerungsanweisung enthält. Das erzeugte Ausgangssignal wird sodann über die Komponentenschnittstelle des betreffenden Zutrittskontroll-Funkknotens an die angeschlossene Zutrittskontroll-Komponente ausgegeben. In dem obigen Beispiel des Scharfschaltens der Einbruchmeldeanlage kann der angeschlossene Funcknoten z.B. den Befehl zum Scharfschalten z.B. durch ein entsprechendes Schaltsignal an die Zentrale der Einbruchmeldeanlage senden, nachdem der Funkknoten eine entsprechende Anweisung von einem andere Funkknoten erhalten hat. Hierzu kann der mit der Zentrale der Einbruchmeldeanlage unmittelbar verbundene Funkknoten auch sogenannte "Dauer-zu"-Anweisungen an zumindest diejenigen Funkknoten des Zutrittskontrollsystems senden, an welche Zutrittskontroll-Komponenten angeschlossen sind, die bei der Überwachung der Außenhaut des Gebäudes oder Gebäudeteils berücksichtigt werden sollen. "Dauer-zu"-Anweisungen dienen z.B. dazu, einen elektronischen Schließzylinder in einen geschlossenen Zustand zu überführen, der nur durch vorheriges Unscharfschalten der Einbruchmeldeanlage verlassen werden kann. Somit dienen "Dauer-zu"-Anweisungen zur Umsetzung der Zwangsläufigkeit der Einbruchmeldeanlage.

Gemäß einer weiteren Ausführungsform ist die Steuerungseinrichtung des jeweiligen Zutrittskontroll-Funkknotens dazu angepasst, in Ansprechen auf den Empfang eines Eingangssignals und/oder in Abhängigkeit einer Ausgabe eines Ausgangssignals ein Quittierungssignal über die Funkkommunikationseinrichtung oder die Komponentenschnittstelle abzugeben. Wiederum anknüpfend an das obige Beispiel kann ein Funkknoten ein Quittierungssignal senden, nachdem die angeschlossene Türöffnungskomponente auf "Dauer-zu" geschaltet worden ist und somit zur Aktivierung der Alarmsicherung vorbereitet ist. Der an die Zentrale der Einbruchmeldeanlage angeschlossene Funkknoten kann dann den Empfang aller erforderlichen Quittierungssignale detektieren, d.h. dieser Funkknoten überprüft, ob alle relevanten Türöffnungskomponenten auf "Dauer-zu" geschaltet worden sind. Sofern alle Quittierungssignale positiv sind, kann die Einbruchmeldeanlage scharfgeschaltet werden, woraufhin ein positives Quittierungssignal an die Türöffnungs-Komponente übermittelt werden kann, von der aus die Anweisung zum Scharfschalten der Einbruchmeldeanlage ursprünglich abgesetzt worden war. Dem Benutzer kann somit z.B. optisch oder akustisch der Erfolg seiner Anweisung vermittelt werden. Sofern die Einbruchanmeldeanlage nicht scharfgeschaltet werden konnte, kann dies dem Benutzer durch ein entsprechendes negatives Quittierungssignal mitgeteilt werden.

Gemäß einer weiteren Ausführungsform kann das Zutrittskontrollsystem dazu angepasst sein, Steuerungsanweisungen, die verschiedene der mehreren Zutrittskontroll-Funkknoten betreffen, ohne Einbeziehung einer zentralen Systemsteuerungseinheit auszuführen. Insbesondere kann vorgesehen sein, dass das Zutrittskontrollsystem überhaupt keine zentrale Systemsteuerungseinheit aufweist. Beispielsweise können zumindest einige der mehreren Zutrittskontroll-Funkknoten dazu angepasst sein, eine Steuerungsanweisung für zumindest einen anderen der mehreren Zutrittskontroll-Funkknoten zu erzeugen und an den anderen Zutrittskontroll-Funkknoten direkt oder über wenigstens einen weiteren Zutrittskontroll-Funkknoten zu übermitteln, ohne dass die Steuerungsanweisung an eine zentrale Systemsteuerungseinheit übermittelt wird. Mit anderen Worten ist die Funktionsweise des Zutrittskontrollsystems bei dieser Ausführungsform eine dezentrale, d.h. Anweisungen können unabhängig von einer übergeordneten Steuerungs- bzw. Kontrollinstanz übermittelt und ausgeführt werden, wodurch die Effizienz und die Ausfallsicherheit des Zutrittskontrollsystems nochmals gesteigert werden können.

Die Erfindung wird im Folgenden lediglich beispielhaft anhand der Zeichnung erläutert, in der:

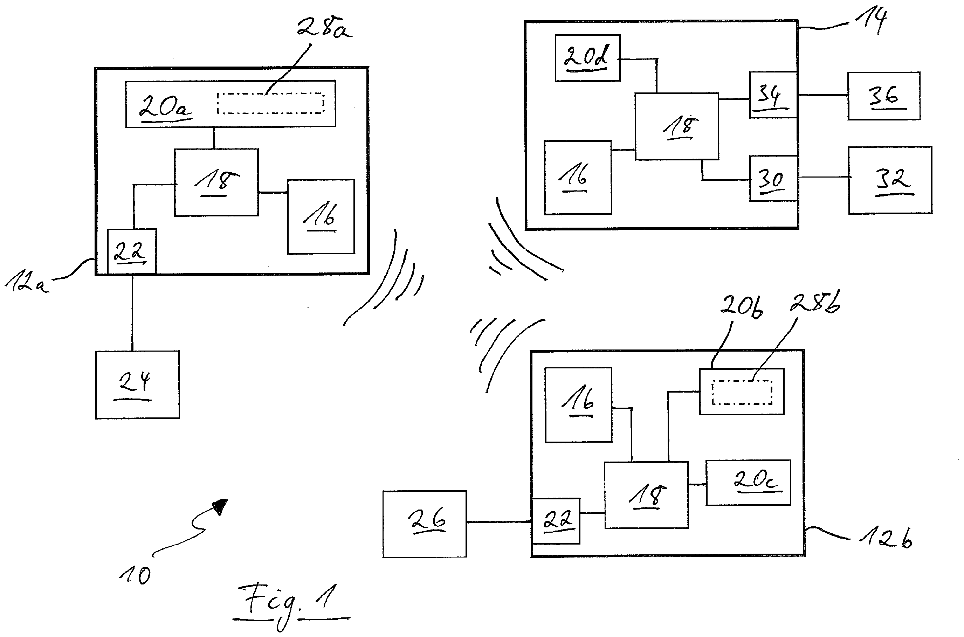

- Fig. 1: ein elektronisches Zutrittskontrollsystem zeigt.

Ein in Fig. 1 gezeigtes elektronisches Zutrittskontrollsystem 10 umfasst ein Funknetzwerk mit beispielsweise zwei Zutrittskontroll-Funkknoten 12a, 12b und einem Systemverwaltungs-Funkknoten 14. Die Zutrittskontroll-Funkknoten 12 sowie der Systemverwaltungs-Funkknoten 14 weisen jeweils eine Funkkommunikationseinrichtung 16 auf, wodurch die Funkknoten 12, 14 drahtlos, d.h. per Funk, miteinander kommunizieren können. Ferner weisen die Funkknoten 12, 14 jeweils eine Steuerungseinrichtung 18 und zumindest einer Speichereinrichtung 20 auf. Des Weiteren weisen die Zutrittskontroll-Funkknoten 12 jeweils eine Komponentenschnittstelle 22 auf.

An die Komponentenschnittstelle 22 des Zutrittskontroll-Funkknotens 12a ist eine Zentrale 24 einer Einbruchmeldeanlage (nicht gezeigt) angeschlossen. An die Komponentenschnittstelle 22 des Zutrittskontroll-Funkknotens 12b ist ein elektronischer Schließzylinder 26 einer Tür (nicht gezeigt) angeschlossen. Die Tür ist Bestandteil eines nicht gezeigten Gebäudes, deren Zutrittsmöglichkeiten durch das Zutrittskontrollsystem 10 gesteuert und durch die Einbruchmeldeanlage in Abhängigkeit einer Scharfschaltung der Zentrale 24 überwacht werden. Entsprechend versteht es sich, dass das Zutrittskontrollsystem 10 noch weitere Zutrittskontroll-Funkknoten 12 aufweisen kann, wobei an die weiteren Zutrittskontroll-Funkknoten 12 auch andere Zutrittskontrollkomponenten, wie etwa ein elektronischer Wandleser (nicht gezeigt), ein Riegelaktor (nicht gezeigt) oder eine Lichtschranke (nicht gezeigt) angeschlossen sein können. Die Zentrale 24 und der Schließzylinder 26 sind Zutrittskontroll-Komponenten des Zutrittskontrollsystems 10.

In der Speichereinrichtung 20a des Funkknotens 12a sind eine Systemsteuerungs-Software (nicht gezeigt) sowie ein Anwendungssteuerungs-Programmmodul 28a gespeichert. Das Anwendungssteuerungs-Programmmodul 28a kann von der Steuerungseinrichtung 18 mittels eines Interpreters (nicht gezeigt) ausgeführt werden, der in die Systemsteuerungs-Software des Funkknotens 12a integriert ist. Hierdurch wird der Zutrittskontroll-Funkknoten 12a in die Lage versetzt, auf der Grundlage eines oder mehrerer Eingangssignale, die über die Funkkommunikationseinrichtung 16 oder die Komponentenschnittstelle 22 empfangen worden sind, Ausgangssignale zu erzeugen, welche über die Funkkommunikationseinrichtung 16 oder die Komponentenschnittstelle 22 ausgegeben werden. Entsprechend dem Funkknoten 12a, sind auch im Funkknoten 12b eine Systemsteuerungs-Software sowie ein Anwendungssteuerungs-Programmmodul 28b gespeichert, welches durch einen Interpreter der Systemsteuerungs-Software des Funkknotens 12b ausgeführt werden kann, um Ausgangssignale auf der Basis von empfangenen Eingangssignalen erzeugen zu können. Abweichend zu dem Fall des Funkknotens 12a sind das Anwendungssteuerungs-Programmmodul 28b in einer ersten Speichereinrichtung 20b und die Systemsteuerungs-Software in einer zweiten Speichereinrichtung 20c gespeichert. Vorzugsweise sind die Anwendungssteuerungs-Programmmodule 28a, 28b der Funkknoten 12a, 12b unterschiedlich ausgebildet, wohingegen beide Funkknoten 12a, 12b über eine einheitliche Systemsteuerungs-Software verfügen. Beispielsweise können die Anwendungssteuerungs-Programmodule 28a, 28b jeweils über individuelle Vorschriften verfügen, um die an den jeweils betreffenden Funkknoten 12a, 12b angeschlossene Zutrittskontrollkomponente 24 bzw. 26 ansteuern zu können. Alternativ zu dem Fall von zwei separaten Speichereinrichtungen 20b, 20c des Funkknotens 12b kann auch eine gemeinsame Speichereinrichtung 20 vorgesehen sein, die über zwei Speichermodule (nicht gezeigt) verfügt, in denen die Systemsteuerungs-Software und das Anwendungssteuerungs-Programmmodul 28 separat gespeichert sind.

Zur Aktualisierung der Anwendungssteuerungs-Programmodule 28 via Funk ist der Systemverwaltungs-Funkknoten 14 vorgesehen, welcher zu diesem Zweck über eine Computerschnittstelle 30 (z.B. LAN-Netzwerkschnittstelle) zum Anschließen eines Systemverwaltungscomputers 32 (z.B. Laptop) sowie über eine Speicherschnittstelle 34 zum Anschließen eines portablen Massenspeichers 36 (z.B. USB-Stick) verfügt. Über die Computerschnittstelle 30 kann das Zutrittskontrollsystem 10 sowohl lokal als auch aus der Ferne verwaltet bzw. konfiguriert werden. Es versteht sich, dass die Computerschnittstelle 30 und die Speicherschnittstelle 34 gleichartig (z.B. als USB-Schnittstelle) ausgebildet sein können. Über die Speicherschnittstelle 34 und die Funkkommunikationseinrichtung 16 des Funkknotens 14 kann bedarfsweise ein neues Anwendungssteuerungs-Programmmodul 28 an einen oder beide Zutrittskontroll-Funkknoten 12a, 12b übertragen werden und in der jeweils vorgesehenen Speichereinrichtung 20 gespeichert werden. Hierbei muss nicht notwendigerweise stets ein vollständiges Anwendungssteuerungs-Programmmodul 28 übertragen werden. Es können auch lediglich Teile des Anwendungssteuerungs-Programmmoduls 28 übertragen werden. Alternativ zu dem Fall einer Übertragung über die Speicherschnittstelle 34 kann die Übertragung auch über die Computerschnittstelle 30 erfolgen. Ferner können Versionsdaten der in den Zutrittskontroll-Funkknoten 12 gespeicherten Anwendungssteuerungs-Programmmodule 28 oder Zustandsinformationen angeschlossener Zutrittskontroll-Komponenten 24, 26 über die Computerschnittstelle 30 ausgelesen werden, um Anwendungssteuerungs-Programmmodule 28 bedarfsgerecht aktualisieren zu können. Die Systemsteuerungs-Software der Zutrittskontroll-Funkknoten 12a, 12b bleibt im Zuge einer Aktualisierung von Programmmodulen 28 vorzugsweise unverändert, sodass aktualisierungsbedingte Risiken reduziert werden. Insgesamt kann die Aktualisierung auf das notwendige Mindestmaß beschränkt werden, wodurch der Aktualisierungsaufwand reduziert und die Zuverlässigkeit des Zutrittskontrollsystems 10 erhöht wird.

### Bezugszeichenliste

- 10: Zutrittskontrollsystem
- 12: Zutrittskontroll-Funkknoten
- 14: Systemverwaltungs-Funkknoten
- 16: Funkkommunikationseinrichtung
- 18: Steuerungseinrichtung
- 20: Speichereinrichtung
- 22: Komponentenschnittstelle
- 24: Zentrale einer Einbruchmeldeanlage
- 26: Elektronischer Schließzylinder
- 28: Anwendungssteuerungs-Programmmodul
- 30: Computerschnittstelle
- 32: Systemverwaltungscomputer
- 34: Speicherschnittstelle
- 36: Massenspeicher

## Patentansprüche

1. Zutrittskontrollsystem (10) mit einem Funknetzwerk und mehreren elektrischen Zutrittskontroll-Komponenten (24, 26),
wobei das Funknetzwerk mehrere Zutrittskontroll-Funkknoten (12) aufweist, von denen jeder umfasst:
- eine Funkkommunikationseinrichtung (16),
- wenigstens eine Komponentenschnittstelle (22) zum Anschließen einer der mehreren Zutrittskontroll-Komponenten (24, 26),
- eine Steuerungseinrichtung (18), und
- eine Speichereinrichtung (20), in der eine Systemsteuerungs-Software und ein Anwendungssteuerungs-Programmmodul (28) gespeichert sind, wobei in der Systemsteuerungs-Software zumindest ein Kommunikationsprotokoll und ein Interpreter für das Anwendungssteuerungs-Programmmodul (28) enthalten sind, wobei das Anwendungssteuerungs-Programmmodul (28) Vorschriften zur Definition eines Funktionsumfangs des Zutrittskontroll-Funkknotens (12) enthält;
wobei die Steuerungseinrichtung (18) des jeweiligen Zutrittskontroll-Funkknotens (12) dazu angepasst ist,
- gemäß dem in der Systemsteuerungs-Software enthaltenen Kommunikationsprotokoll über die Funkkommunikationseinrichtung (16) mit anderen der mehreren Zutrittskontroll-Funkknoten (12) zu kommunizieren,
- über die Funkkommunikationseinrichtung (16) das Anwendungssteuerungs-Programmmodul (28) als Ganzes zu empfangen und in der Speichereinrichtung (20) zu speichern,
- mittels des in der Systemsteuerungs-Software enthaltenen Interpreters das gespeicherte Anwendungssteuerungs-Programmmodul (28) auszuführen, und
- in Abhängigkeit von Eingangssignalen, die über die Funkkommunikationseinrichtung (16) oder die Komponentenschnittstelle (22) empfangen werden, gemäß dem ausgeführten Anwendungssteuerungs-Programmmodul (28) Ausgangssignale zu erzeugen, die über die Funkkommunikationseinrichtung (16) oder die Komponentenschnittstelle (22) ausgegeben werden,
wobei die Steuerungseinrichtung (18) des jeweiligen Zutrittskontroll-Funkknotens (12) dazu angepasst ist, auf der Grundlage eines empfangenen Eingangssignals, welches eine Steuerungsanweisung für zumindest einen anderen der mehreren Zutrittskontroll-Funkknoten (12) enthält, gemäß dem ausgeführten Anwendungssteuerungs-Programmmodul (28) ein Ausgangssignal zu erzeugen, welches die Steuerungsanweisung enthält, und das erzeugte Ausgangssignal über die Funkkommunikationseinrichtung (16) an den zumindest einen anderen Zutrittskontroll-Funkknoten (12) zu übermitteln,
wobei die Steuerungseinrichtung (18) des jeweiligen Zutrittskontroll-Funkknotens (12) ferner dazu angepasst ist, auf der Grundlage eines empfangenen Eingangssignals, welches eine Steuerungsanweisung für eine angeschlossene Zutrittskontroll-Komponente (24, 26) enthält, gemäß dem ausgeführten Anwendungssteuerungs-Programmmodul (28) ein Ausgangssignal zu erzeugen, welches einen Steuerungsbefehl zur Umsetzung der Steuerungsanweisung enthält, und das erzeugte Ausgangssignal über die Komponentenschnittstelle (22) an die angeschlossene Zutrittskontroll-Komponente (24, 26) auszugeben,
wobei die Steuerungseinrichtung (18) eines Zutrittskontroll-Funkknotens mit einer angeschlossenen Türöffnungskomponente (26) dazu angepasst ist,
eine Anweisung zum Scharfschalten einer Einbruchmeldeanlage mit einer in das Zutrittskontrollsystem integrierten Zentrale von der angeschlossenen Türöffnungskomponente zu empfangen und an einen Zutrittskontroll-Funkknoten zu übermitteln, der mit der Zentrale der Einbruchmeldeanlage verbunden ist, wobei die Steuerungseinrichtung (18) des mit der Zentrale verbundenen Zutrittskontroll-Funkknotens dazu angepasst ist, nach dem Empfangen der Anweisung zum Scharfschalten das Scharfschalten der 10 Einbruchmeldeanlage durch Senden eines Scharfschaltsignals an die Zentrale der Einbruchmeldeanlage zu veranlassen und zur Umsetzung der Zwangsläufigkeit der Einbruchmeldeanlage Dauer-zu-Anweisungen, welche dazu dienen, eine angeschlossene Türöffnungskomponente in einen geschlossenen Zustand zu überführen, der nur durch vorheriges Unscharfschalten der Einbruchmeldeanlage verlassen werden kann, an weitere Zutrittskontroll-Funkknoten zu senden, an welche Zutrittskontroll-Komponenten angeschlossen sind, die zur Überwachung der Außenhaut eines Gebäudes durch das Zutrittskontroll-System dienen.

2. Zutrittskontrollsystem (10) nach Anspruch 1,
wobei die Systemsteuerungs-Software für sämtliche der mehreren Zutrittskontroll-Funkknoten (12) einheitlich ist.

3. Zutrittskontrollsystem (10) nach Anspruch 1 oder 2,
wobei das Anwendungssteuerungs-Programmmodul (28) für wenigstens einige der mehreren Zutrittskontroll-Funkknoten (12) unterschiedlich ist, oder wobei die Steuerungseinrichtungen (18) von verschiedenen der mehreren Zutrittskontroll-Funkknoten (12) dazu angepasst sind, voneinander verschiedene Teile des Anwendungssteuerungs-Programmmoduls (28) auszuführen.

4. Zutrittskontrollsystem (10) nach zumindest einem der vorherigen Ansprüche,
wobei die Speichereinrichtung (20) des jeweiligen Zutrittskontroll-Funkknotens (12) mehrere Speichermodule umfasst, wobei die Systemsteuerungs-Software in einem der Speichermodule und das Anwendungssteuerungs-Programmmodul (28) in einem anderen der Speichermodule gespeichert ist.

5. Zutrittskontrollsystem (10) nach zumindest einem der vorherigen Ansprüche,
wobei das Funknetzwerk einen Systemverwaltungs-Funkknoten (14) umfasst, welcher zumindest eine Funkkommunikationseinrichtung (16) und eine Steuerungseinrichtung (18) aufweist,
wobei die Steuerungseinrichtung (18) des Systemverwaltungs-Funkknotens (14) dazu angepasst ist, das Anwendungssteuerungs-Programmmodul (28) über die Funkkommunikationseinrichtung (16) des Systemverwaltungs-Funkknotens (14) an den jeweiligen Zutrittskontroll-Funkknoten (12) zu senden.

6. Zutrittskontrollsystem (10) nach Anspruch 5,
wobei der Systemverwaltungs-Funkknoten (14) eine Schnittstelle (30) zum Anschließen eines Systemverwaltungscomputers (32) und/oder eine Schnittstelle (34) zum Anschließen einer portablen Speichereinrichtung (36) aufweist.

7. Zutrittskontrollsystem (10) nach zumindest einem der vorherigen Ansprüche,
wobei wenigstens eine der mehreren Zutrittskontroll-Komponenten eine Türöffnungskomponente (26), einen elektrisch ansteuerbaren Aktor, eine elektrisch ansteuerbare Signalisierungseinrichtung oder eine Komponente einer Einbruchmeldeanlage (24) umfasst.

8. Zutrittskontrollsystem (10) nach zumindest einem der vorherigen Ansprüche,
wobei das Anwendungssteuerungs-Programmmodul (28) des jeweiligen Zutrittskontroll-Funkknotens (12) wenigstens eine Vorschrift darüber enthält, dass
- eine in einem empfangenen Eingangssignal enthaltene Zustandsinformation an zumindest einen vorbestimmten anderen der mehreren Zutrittskontroll-Funkknoten (12) oder an eine angeschlossene Zutrittskontroll-Komponente (24, 26) übermittelt werden soll; und/oder
- eine in einem empfangenen Eingangssignal enthaltene Steuerungsanweisung an zumindest einen vorbestimmten anderen der mehreren Zutrittskontroll-Funkknoten (12) oder an eine angeschlossene Zutrittskontroll-Komponente (24, 26) übermittelt werden soll; und/oder
- die in mehreren empfangenen Eingangssignalen enthaltenen Zustandsinformationen oder Steuerungsanweisungen in einer vorbestimmten Weise logisch miteinander verknüpft werden sollen.

9. Zutrittskontrollsystem (10) nach zumindest einem der vorherigen Ansprüche,
wobei die Steuerungseinrichtung (18) des jeweiligen Zutrittskontroll-Funkknotens (12) dazu angepasst ist, in Ansprechen auf den Empfang eines Eingangssignals und/oder in Abhängigkeit einer Ausgabe eines Ausgangssignals ein Quittierungssignal über die Funkkommunikationseinrichtung (16) oder die Komponentenschnittstelle (22) abzugeben.

10. Zutrittskontrollsystem (10) nach zumindest einem der vorherigen Ansprüche,
wobei das Zutrittskontrollsystem (10) keine zentrale Systemsteuerungseinheit aufweist.

11. Zutrittskontrollsystem (10) nach zumindest einem der vorherigen Ansprüche,
wobei die Komponentenschnittstelle (22) wenigstens eines der mehreren Zutrittskontroll-Funkknoten (12) eine Funkschnittstelle ist.

12. Zutrittskontrollsystem (10) nach zumindest einem der vorherigen Ansprüche,
wobei wenigstens einer der mehreren Zutrittskontroll-Funkknoten (12) und die angeschlossene Zutrittskontroll-Komponente (24, 26) eine Baueinheit bilden, wobei die Komponentenschnittstelle (22) eine interne Schnittstelle der Baueinheit ist.

## Claims

1. An access control system (10) comprising a radio network and a plurality of electrical access control components (24, 26),
wherein the radio network comprises a plurality of access control radio nodes (12), of which each comprises:
- a radio communication device (16);
- at least one component interface (22) for connecting one of the plurality of access control components (24, 26);
- a control device (18); and
- a storage device (20) in which system control software and an application control program module (28) are stored, with at least one communication protocol and an interpreter for the application control program module (28) being included in the system control software, and with the application control program module (28) including rules for defining a functional scope of the access control radio node (12);
wherein the control device (18) of the respective access control radio node (12) is adapted
- to communicate with other ones of the plurality of access control radio nodes (12) via the radio communication device (16) in accordance with the communication protocol included in the system control software;
- to receive the application control program module (28) as a whole via the radio communication device (16) and to store it in the storage device (20);
- to execute the stored application control program module (28) by means of the interpreter included in the system control software; and
- to generate output signals, which are output via the radio communication device (16) or the component interface (22), in dependence on input signals, which are received via the radio communication device (16) or the component interface (22), in accordance with the executed application control program module (28);
wherein the control device (18) of the respective access control radio node (12) is adapted to generate an output signal, which includes the control instruction, on the basis of a received input signal, which includes a control instruction for at least one other of the plurality of access control radio nodes (12), in accordance with the executed application control program module (28) and to transmit the generated output signal via the radio communication device (16) to the at least one other access control radio node (12);
wherein the control device (18) of the respective access control radio node (12) is further adapted to generate an output signal, which includes a control command for implementing the control instruction, on the basis of a received input signal, which includes a control instruction for a connected access control component (24, 26), in accordance with the executed application control program module (28) and to output the generated output signal via the component interface (22) to the connected access control component (24, 26);
wherein the control device (18) of an access control radio node having a connected door opening component (26) is adapted to receive an instruction for arming an intrusion alarm system, having a control center integrated into the access control system, from the connected door opening component and to transmit it to an access control radio node which is connected to the control center of the intrusion alarm system; wherein the control device (18) of the access control radio node connected to the control center is adapted, after receiving the instruction for arming, to initiate the arming of the intrusion alarm system by transmitting an arming signal to the control center of the intrusion alarm system and, in order to implement the inevitability of the intrusion alarm system, to transmit permanently closed instructions, which serve to transfer a connected door opening component into a closed state which can only be departed by a previous disarming of the intrusion alarm system, to further access control radio nodes to which access control components are connected which serve to monitor the outer skin of a building through the access control system.

2. An access control system (10) in accordance with claim 1,
wherein the system control software is uniform for all of the plurality of access control radio nodes (12).

3. An access control system (10) in accordance with claim 1 or claim 2,
wherein the application control program module (28) is different for at least some of the plurality of access control radio nodes (12), or
wherein the control devices (18) of different ones of the plurality of access control radio nodes (12) are adapted to execute parts of the application control program module (28) which are different from one another.

4. An access control system (10) in accordance with at least one of the preceding claims,
wherein the storage device (20) of the respective access control radio node (12) comprises a plurality of memory modules, with the system control software being stored in one of the memory modules and the application control program module (28) being stored in another one of the memory modules.

5. An access control system (10) in accordance with at least one of the preceding claims,
wherein the radio network comprises a system management radio node (14) which has at least one radio communication device (16) and a control device (18), and
wherein the control device (18) of the system management radio node (14) is adapted to transmit the application control program module (28) to the respective access control radio node (12) via the radio communication device (16) of the system management radio node (14).

6. An access control system (10) in accordance with claim 5,
wherein the system management radio node (14) has an interface (30) for connecting a system management computer (32) and/or an interface (34) for connecting a portable storage device (36).

7. An access control system (10) in accordance with at least one of the preceding claims,
wherein at least one of the plurality of access control components comprises a door opening component (26); an electrically controllable actuator; an electrically controllable signaling device; or a component of an intrusion alarm system (24).

8. An access control system (10) in accordance with at least one of the preceding claims,
wherein the application control program module (28) of the respective access control radio node (12) includes at least one rule that
- status information included in a received input signal is to be transmitted to at least one predetermined other one of the plurality of access control radio nodes (12) or to a connected access control component (24, 26); and/or
- a control instruction included in a received input signal is to be transmitted to at least one predetermined other one of the plurality of access control radio nodes (12) or to a connected access control component (24, 26); and/or
- the status information or control instructions included in a plurality of received input signals are to be logically linked to one another in a predetermined manner.

9. An access control system (10) in accordance with at least one of the preceding claims,
wherein the control device (18) of the respective access control radio node (12) is adapted to output an acknowledgment signal via the radio communication device (16) or the component interface (22) in response to the reception of an input signal and/or in dependence on an output of an output signal.

10. An access control system (10) in accordance with at least one of the preceding claims,
wherein the access control system (10) does not have a central system control unit.

11. An access control system (10) in accordance with at least one of the preceding claims,
wherein the component interface (22) of at least one of the plurality of access control radio nodes (12) is a radio interface.

12. An access control system (10) in accordance with at least one of the preceding claims,
wherein at least one of the plurality of access control radio nodes (12) and the connected access control component (24, 26) form an assembly, with the component interface (22) being an internal interface of the assembly.

## Revendications

1. Système de contrôle d'accès (10) comprenant un réseau radio et une pluralité de composants électriques de contrôle d'accès (24, 26), dans lequel le réseau radio présente une pluralité de nœuds radio de contrôle d'accès (12), dont chacun comprend :
- un dispositif de communication radio (16),
- au moins une interface de composant (22) pour connecter l'un de la pluralité de composants de contrôle d'accès (24, 26),
- un dispositif de commande (18), et
- un dispositif de stockage (20) dans lequel sont stockés un logiciel de commande de système et un module de programme de commande d'application (28), le logiciel de commande de système contenant au moins un protocole de communication et un interpréteur pour le module de programme de commande d'application (28), le module de programme de commande d'application (28) contenant des prescriptions pour définir une étendue des fonctions du nœud radio de contrôle d'accès (12) ;
dans lequel le dispositif de commande (18) du nœud radio de contrôle d'accès respectif (12) est adapté
- à communiquer avec d'autres de la pluralité de nœuds radio de contrôle d'accès (12) via le dispositif de communication radio (16) selon le protocole de communication contenu dans le logiciel de commande de système,
- à recevoir le module de programme de commande d'application (28) dans son ensemble via le dispositif de communication radio (16) et à le stocker dans le dispositif de stockage (20),
- à exécuter le module de programme de commande d'application (28) stocké au moyen de l'interpréteur contenu dans le logiciel de commande de système, et
- à générer, en fonction de signaux d'entrée reçus via le dispositif de communication radio (16) ou l'interface de composant (22), selon le module de programme de commande d'application exécuté (28), des signaux de sortie qui sont délivrés via le dispositif de communication radio (16) ou l'interface de composant (22),
dans lequel le dispositif de commande (18) du nœud radio de contrôle d'accès respectif (12) est adapté à générer, sur la base d'un signal d'entrée reçu qui contient une instruction de commande pour au moins un autre de la pluralité de nœuds radio de contrôle d'accès (12), selon le module de programme de commande d'application exécuté (28), un signal de sortie qui contient l'instruction de commande, et à transmettre le signal de sortie généré via le dispositif de communication radio (16) audit au moins un autre nœud radio de contrôle d'accès (12),
dans lequel le dispositif de commande (18) du nœud radio de contrôle d'accès respectif (12) est en outre adapté à générer, sur la base d'un signal d'entrée reçu qui contient une instruction de commande pour un composant de contrôle d'accès connecté (24, 26), selon le module de programme de commande d'application exécuté (28), un signal de sortie qui contient un ordre de commande pour mettre en œuvre l'instruction de commande, et à délivrer le signal de sortie généré via l'interface de composant (22) au composant de contrôle d'accès connecté (24, 26),
dans lequel le dispositif de commande (18) d'un nœud radio de contrôle d'accès comportant un composant d'ouverture de porte connecté (26) est adapté à recevoir, du composant d'ouverture de porte connecté, une instruction d'armement d'une installation d'alarme anti-intrusion avec une unité centrale intégrée dans le système de contrôle d'accès et à la transmettre à un nœud radio de contrôle d'accès qui est relié à l'unité centrale de l'installation d'alarme anti-intrusion, dans lequel le dispositif de commande (18) du nœud radio de contrôle d'accès relié à l'unité centrale est adapté, après la réception de l'instruction d'armement, à déclencher l'armement de l'installation d'alarme anti-intrusion par l'envoi d'un signal d'armement à l'unité centrale de l'installation d'alarme anti-intrusion, et, pour mettre en œuvre l'activation obligatoire de l'installation d'alarme anti-intrusion, à envoyer des instructions de fermeture permanente qui servent à mettre un composant d'ouverture de porte connecté dans un état fermé, qui ne peut être quitté que par un désarmement préalable de l'installation d'alarme anti-intrusion, à d'autres nœuds radio de contrôle d'accès auxquels sont connectés des composants de contrôle d'accès qui servent à surveiller l'enveloppe extérieure d'un bâtiment par le système de contrôle d'accès.

2. Système de contrôle d'accès (10) selon la revendication 1,
dans lequel le logiciel de commande de système est identique pour toute la pluralité de nœuds radio de contrôle d'accès (12).

3. Système de contrôle d'accès (10) selon la revendication 1 ou 2,
dans lequel le module de programme de commande d'application (28) est différent pour au moins certains de la pluralité de nœuds radio de contrôle d'accès (12), ou dans lequel les dispositifs de commande (18) de différents nœuds de la pluralité de nœuds radio de contrôle d'accès (12) sont adaptés à exécuter des parties différentes les unes des autres du module de programme de commande d'application (28).

4. Système de contrôle d'accès (10) selon au moins l'une des revendications précédentes,
dans lequel le dispositif de stockage (20) de chaque nœud radio de contrôle d'accès (12) comprend une pluralité de modules de stockage, dans lequel le logiciel de commande de système est stocké dans l'un des modules de stockage et le module de programme de commande d'application (28) dans un autre des modules de stockage.

5. Système de contrôle d'accès (10) selon au moins l'une des revendications précédentes,
dans lequel le réseau radio comprend un nœud radio de gestion de système (14) qui présente au moins un dispositif de communication radio (16) et un dispositif de commande (18),
dans lequel le dispositif de commande (18) du nœud radio de gestion de système (14) est adapté à envoyer le module de programme de commande d'application (28) au nœud radio de contrôle d'accès respectif (12) via le dispositif de communication radio (16) du nœud radio de gestion de système (14).

6. Système de contrôle d'accès (10) selon la revendication 5,
dans lequel le nœud radio de gestion de système (14) présente une interface (30) pour la connexion d'un ordinateur de gestion de système (32) et/ou une interface (34) pour la connexion d'un dispositif de stockage portable (36).

7. Système de contrôle d'accès (10) selon au moins l'une des revendications précédentes,
dans lequel au moins un de la pluralité de composants de contrôle d'accès comprend un composant d'ouverture de porte (26), un actionneur à commande électrique, un dispositif de signalisation à commande électrique ou un composant d'une installation d'alarme anti-intrusion (24).

8. Système de contrôle d'accès (10) selon au moins l'une des revendications précédentes,
dans lequel le module de programme de commande d'application (28) du nœud radio de contrôle d'accès respectif (12) contient au moins une prescription selon laquelle
- une information d'état contenue dans un signal d'entrée reçu doit être transmise à au moins un autre nœud prédéterminé de la pluralité de nœuds radio de contrôle d'accès (12) ou à un composant de contrôle d'accès (24, 26) connecté ; et/ou
- une instruction de commande contenue dans un signal d'entrée reçu doit être transmise à au moins un autre nœud radio prédéterminé de la pluralité de nœuds radio de contrôle d'accès (12) ou à un composant de contrôle d'accès connecté (24, 26) ; et/ou
- les informations d'état ou les instructions de commande contenues dans une pluralité de signaux d'entrée reçus doivent être combinées logiquement entre elles d'une manière prédéterminée.

9. Système de contrôle d'accès (10) selon au moins l'une des revendications précédentes,
dans lequel le dispositif de commande (18) du nœud radio de contrôle d'accès respectif (12) est adapté à émettre un signal d'accusé de réception via le dispositif de communication radio (16) ou l'interface de composant (22) en réponse à la réception d'un signal d'entrée et/ou en fonction d'une délivrance d'un signal de sortie.

10. Système de contrôle d'accès (10) selon au moins l'une des revendications précédentes,
dans lequel le système de contrôle d'accès (10) ne présente pas d'unité de commande de système centrale.

11. Système de contrôle d'accès (10) selon au moins l'une des revendications précédentes,
dans lequel l'interface de composant (22) d'au moins un de la pluralité de nœuds radio de contrôle d'accès (12) est une interface radio.

12. Système de contrôle d'accès (10) selon au moins l'une des revendications précédentes,
dans lequel au moins un de la pluralité de nœuds radio de contrôle d'accès (12) et le composant de contrôle d'accès connecté (24, 26) forment une unité structurale, dans lequel l'interface de composant (22) est une interface interne de l'unité structurale.
